# EUROPÄISCHE PATENTANMELDUNG

(11) **EP 0 845 202 A2**
(43) Veröffentlichungstag der Anmeldung: **03.06.1998**
(21) Anmeldenummer: 97119331.3
(22) Anmeldetag: 05.11.1997
(51) Int. Cl.: A01G 1/00

(54) **Begrünungselement sowie Verfahren zur Bildung einer Begrünung**

(30) Priorität: 21.11.1996 DE 19648106
(71) Anmelder: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner

(57) **Zusammenfassung**

Es wird ein Begrünungselement für die Begrünung von aus natürlichem Boden und/oder Substratflächen bestehenden Begrünungskörpern beschrieben. Das Begrünungselement umfaßt eine Saatenmatte, welche an örtlich voneinander getrennten Stellen gleichmäßig verteilt Saatkörner aufweist, die durch die Saatenmatte fixiert und festgehalten sind. Neben den Saatkörnern enthält die Saatenmatte, die auf den Begrünungskörper gelegt wird, noch einen Trockenkleber, so daß unter Einwirkung von Wasser die Saatenmatte klebend mit dem Begrünungskörper verbunden wird.

## Beschreibung

Bei der Bildung einer Begrünung von Begrünungskörpern mit Rasen oder anderen Pflanzen ist es erforderlich, die Saatkörner für die betreffenden Pflanzen zu sähen und auf dem Begrünungskörper aufzubringen. Anschließend kann die gewünschte Begrünung hergestellt werden, wobei gegebenenfalls noch eine begleitende gärtnerische Pflege erforderlich ist.

Als Begrünungskörper kommen beim Landschaftsbau bevorzugt Böschungen oder auch Lärmschutzwälle in Betracht, die natürlichen Boden enthalten. Durch die Begrünung wird dabei wegen der Verwurzelung der Pflanzen im Boden eine Verfestigung im Sinne eines Erosionsschuztes erreicht.

Außerdem ergibt sich durch die Begrünung auch in optischer Hinsicht ein angenehmes Erscheinungsbild.

Daneben kann der Begrünungskörper aber auch durch Substratflächen oder durch Bestandteil von Vegetationsmatten für die Begrünung von künstlichen Flächen, insbesondere für die Dachbegrünung, gebildet sein. Um die gewünschte Begrünung herzustellen, müssen auch hier Saatkörner aufgebracht werden.

In der Praxis erfolgt das Sähen der Saatkörner üblicherweise von einer Person, welche die Saatkörner von Hand aufbringt. Dabei hat sich gezeigt, daß die Saatkörner häufig ungleichmäßig auf dem Begrünungskörper verteilt sind, und daß es Bereiche mit zuvielen Saatkörnern und andere Bereiche mit sehr wenigen Saatkörnern oder auch Leerstellen gibt, an denen keine Saatkörner zu finden sind. Als Folge dieses ungleichmäßigen Aufbringens der Saatkörner stellt sich in nachteiliger Weise eine ungleichmäßige Begrünung ein. Dies wirkt sich nachteilig auf den etwa bei Böschungen angestrebten Erosionsschutz aus, denn die Leerstellen sind sehr anfällig und hier besteht die Gefahr, daß durch äußere Einwirkung, insbesondere durch Windeinwirkungen der Boden abgetragen wird.

Daneben wirkt eine ungleichmäßige Begrünung auch in optischer Hinsicht unangenehm.

Wenn die Person, welche die Saatkörner von Hand ausbringt, feststellt, daß kein gleichmäßiger Auftrag vorliegt, versucht sie automatisch, die Leerstellen oder die nur gering mit Saatkörnern versehenen Bereiche nachträglich durch weiteres Aufbringen von Saatkörnern aufzufüllen. Im Ergebnis führt dies aber dazu, daß insgesamt sehr viel mehr Saatkörner benötigt werden, als es an sich für eine vorgegebene Fläche des Begrünungskörpers erforderlich wäre. Dadurch wird die Bildung einer Begrünung in nachteiliger Weise verteuert.

Im übrigen ist in der Praxis zu beobachten, daß die aufgebrachten Saatkörner nicht immer vollständig auf dem Begrünungskörper verbleiben, weil sie äußeren Einflüssen ausgesetzt sind. Insbesondere bei starkem Wind besteht die Gefahr, daß einzelne Saatkörner weggeweht werden. Dadurch ergibt sich wiederum eine ungleichmäßige Begrünung mit den voranstehend geschilderten Nachteilen.

Vor diesem Hintergrund liegt der Erfindung die Aufgabe zugrunde, zur Beseitigung der bestehenden Nachteile ein Begrünungselement zu schaffen, welches zur Bildung einer Begrünung auf einem durch natürlichen Boden und/oder durch Substratflächen gebildeten Begrünungskörper verwendet werden kann, und zwar bei geringen Kosten für die Bildung der Begrünung.

Die Lösung dieser Aufgabe erfolgt durch die Merkmale des Patentanspruchs 1.

Bei der Erfindung wird in neuartiger Weise das Begrünungselement durch eine Saatenmatte aus flexiblem verrottbarem Material gebildet, welche bereits an örtlich voneinander getrennten Stellen Saatkörner enthält, die durch die Saatenmatte fixiert und festgehalten sind. Ein weiteres wichtiges Merkmal der Erfindung besteht darin, daß die Saatenmatte zumindest teilweise mit einem pflanzenverträglichen Trockenkleber versehen ist, durch welchen die Saatenmatte unter Einwirkung von Wasser zumindest solange mit dem Begrünungskörper klebend verbunden ist, bis eine hinreichende Verwurzelung des Begrünungskörpers durch die den Saatkörnern entsprechenden Pflanzen erreicht ist.

Die Erfindung beruht auf zwei grundlegenden Gedanken. Zum einen wird eine Saatenmatte verwendet, welche die benötigten Saatkörner in der erforderlichen Menge und gleichmäßig an örtlich voneinander getrennten Stellen fixiert enthält, und die auf den Begrünungskörper gelegt wird. Dadurch wird ein gleichmäßiges Wachstum der Pflanzen gewährleistet. Das bekannte Aufbringen der Saatgutkörner von Hand wird also durch das Aufbringen der Saatenmatte ersetzt, die großflächig auf dem Begrünungskörper verlegt werden kann. Es hat sich in Versuchen herausgestellt, daß sich wegen der bereits durch die Saatenmatte vorgegebenen gleichmäßigen Verteilung der Saatkörner der Verbrauch an Saatkörnern um mehr als 50 % reduzieren läßt, was zu einem Kostenvorteil führt.

Ferner ist es von entscheidender Bedeutung, daß die Saatenmatte in neuartiger Weise mit einem pflanzenverträglichen Trockenkleber versehen ist, durch welchen die Saatenmatte unter Einwirkung von Wasser mit dem Begrünungskörper verbunden werden kann. Durch diese Verbindung im Sinne einer Befestigung wird gewährleistet, daß die Saatenmatte auf dem Begrünungskörper liegen bleibt, auch wenn sie starkem Wind ausgesetzt ist, da die Saatenmatte eine klebende Verbindung mit dem Begrünungskörper eingeht. Die Menge des Trockenklebers wird zweckmäßig so dosiert, daß die klebende Verbindung zumindest solange gewährleistet ist, bis eine hinreichende Verwurzelung des Begrünungskörpers durch die Pflanzen erreicht ist. Dann ergibt sich ein Erosionsschutz duch die Wurzeln der Pflanzen selbst.

In vorteilhafter Ausgestaltung der Erfindung besteht die Saatenmatte aus einer Unterschicht und einer damit verbundenen Oberschicht, zwischen denen die Saatkörner fixiert sind, und zwischen denen sich der Trockenkleber gleichmäßig verteilt befindet. Die Unterschicht und die Oberschicht können durch ein Vlies gebildet sein.

Eine andere Ausgestaltung der Erfindung sieht vor, daß die Saatenmatte ein unteres Trägervlies umfaßt, auf dem die Saatkörner und der Trockenkleber angeordnet sind, und daß das Trägervlies mit einem pflanzenverträglichen Klebstoff besprüht ist. Die Oberschicht der Saatenmatte kann auch durch eine Klebeschicht aus einem pflanzenverträglichen Klebstoff gebildet sein.

In zweckmäßiger Weise ist die Saatenmatte in ihrem Bereich unterhalb des Trockenklebers bzw. die Unterschicht der Saatenmatte besonders porös ausgebildet. Somit kann der Trockenkleber bei Zugabe von Wasser den unteren Teil der Saatenmatte leicht durchdringen, um eine klebende Verbindung mit dem Begrünungskörper herzustellen.

Eine weitere Ausgestaltung der Erfindung sieht noch vor, daß die Saatenmatte aus einer Unterschicht und einer damit verbundenen Oberschicht besteht, zwischen denen die Saatkörner fixiert sind, und daß der Trockenkleber auf der unteren Oberfläche der Unterschicht der Saatenmatte angeordnet ist. Dabei läßt sich der Trockenkleber klebend an der Unterschicht fixieren. Diese Anordnung hat den Vorteil, daß der Trockenkleber bei Zugabe von Wasser unmittelbar in Kontakt mit dem Begrünungskörper gelangt und die gewünschte Klebeverbindung zwischen der Saatenmatte und dem Begrünungskörper herstellen kann.

Der Erfindung liegt ferner die Aufgabe zugrunde, ein Verfahren zur Bildung einer Begrünung auf einem durch natürlichen Boden und/oder durch Substratflächen gebildeten Begrünungskörper zu schaffen, welches wirtschaftlich durchführbar und die Nachteile einer ungleichmäßigen Begrünung vermeidet.

Diese Aufgabe wird bei der Erfindung durch die Merkmale des Patentanspruchs 7 gelöst.

Auch hierbei steht die Saatenmatte im Vordergrund, die auf den Begrünungskörper gelegt wird, und die bereits Saatkörner enthält, die durch die Saatenmatte fixiert und festgehalten sind. Außerdem enthält die Saatenmatte einen pflanzenverträglichen Trockenkleber.

Diese Saatenmatte wird auf den Begrünungskörper gelegt, und anschließend wird die Saatenmatte bewässert, um den Trockenkleber zu aktivieren, wodurch die Saatenmatte an dem Begrünungskörper klebend haftet.

Zur Bildung einer Begrünung auf besonders großflächigen Begrünungskörpern sieht die Erfindung in vorteilhafter Weiterbildung vor, mehrere Bahnen von Saatenmatten nebeneinander auf dem Begrünungskörper zu einer geschlossenen Fläche zu verlegen.

Anhand des in der Zeichnung dargestellten Ausführungsbeispiels wird die Erfindung nachfolgend näher erläutert. Es zeigen:
- Fig. 1: eine Draufsicht auf einen Teil einer Saatenmatte,
- Fig. 2: eine Querschnittsansicht einer Saatenmatte gemäß Fig. 1, und
- Fig. 3: einen Begrünungskörper mit einem Begrünungselement in Form einer Saatenmatte.

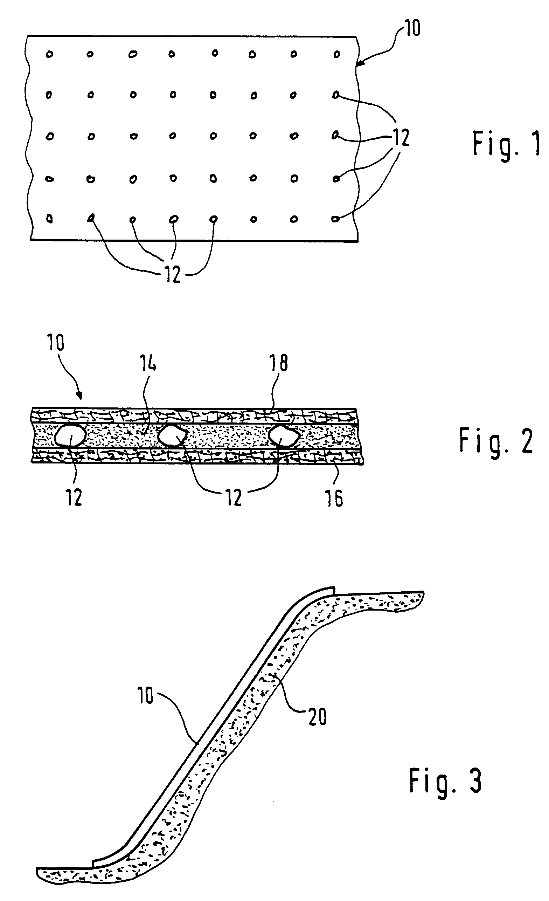

In Fig. 1 ist als Draufsicht ein Ausschnitt eines Begrünungselementes in Form einer Saatenmatte 10 dargestellt. Wie zu erkennen ist, enthält die Saatenmatte 10 an örtlich voneinander getrennten Stellen gleichmäßig verteilt angeordnete Saatkörner 12, die durch die Saatenmatte 10 fixiert und festgehalten sind.

Der nähere Aufbau einer Saatenmatte 10 ergibt sich aus der Querschnittsansicht gemäß Fig. 2. Die Saatenmatte 10 umfaßt eine Unterschicht 16 und eine damit verbundene Oberschicht 18. Dazwischen befinden sich die Saatkörner 12, und außerdem ist zwischen den beiden Schichten 16, 18 ein pflanzenverträglicher Trockenkleber 14 angeordnet. Die Unterschicht 16 sowie die Oberschicht 18 können aus flexiblem und verrottbarem Vlies bestehen. Die Unterschicht 16 wird besonders porös ausgebildet, so daß der Trockenkleber 14 bei Zugabe von Wasser die Unterschicht 16 gut und schnell durchdringen kann, um die klebende Verbindung mit einem Untergrund herzustellen.

Fig. 3 zeigt in einer Querschnittsansicht als Begrünungskörper eine Böschung 20 mit natürlichem Boden. Auf die Böschung 20 wird zur Herstellung einer Begrünung die Saatenmatte 10 verlegt. Sofern es sich um große und lange Flächen handelt, können mehrere Saatenmatten 10 nebeneinander zu einer geschlossenen Fläche verlegt werden. Da die Saatenmatte aus flexiblem Material besteht, paßt sie sich eventuellen Unebenheiten der Böschung an.

Durch Zufuhr von Wasser wird der Trockenkleber 16 der Saatenmatte 10 aktiviert und es wird eine klebende Verbindung mit der Oberfläche der Böschung 20 hergestellt. Im Ergebnis wird dadurch die Saatenmatte 10 auf der Böschung befestigt und ist gegen Windeinwirkungen geschützt. Gleichzeitig beginnt das Wachstum der den Saatkörnern 12 entsprechenden Pflanzen, deren Wurzeln sich in die Böschung erstrecken.

Die Menge des Trockenklebers 14 wird so dosiert, daß die Klebeverbindung mit der Böschung zumindest solange hält, bis eine ausreichende Verwurzelung durch die Pflanzen erfolgt ist, weil dann eine Verbindung der Saatenmatte 10 mit der Böschung 20 nicht mehr erforderlich ist. Außerdem besteht die Saatenmatte aus einem verrottbarem Material, so daß sie sich nach einer gewissen Zeit praktisch selbst auflöst, wenn die Begrünung hergestellt ist.

Bei der Erfindung wird somit das bisherige Aufbringen der Saat ersetzt durch das Verlegen der Saatenmatte und durch deren Befestigung auf einem Begrünungskörper mit Hilfe des Trockenklebers.

Anhand von Fig. 3 wurde die Begrünung einer Böschung 20, also eine Begrünungskörpers aus natürlichem Boden beschrieben. Die Erfindung läßt sich ebenso aber auch anwenden, wenn der Begrünungskörper durch ein Substrat bzw. durch einen Vegetationsträger bei einer Dachbegrünung gebildet ist.

## Patentansprüche

1. Begrünungselement zur Bildung einer Begrünung auf einem durch natürlichen Boden und/oder durch Substratflächen gebildeten Begrünungskörper, dadurch gekennzeichnet, daß das Begrünungselement durch eine Saatenmatte (10) aus flexiblem verrottbarem Material gebildet ist, daß die Saatenmatte (10) an örtlich voneinander getrennten Stellen Saatkörner (12) enthält, die durch die Saatenmatte (10) fixiert und festgehalten sind, und daß die Saatenmatte (10) zumindest teilweise mit einem pflanzenverträglichen Trockenkleber (14) versehen ist, durch welchen die Saatenmatte (10) unter Einwirkung von Wasser zumindest solange mit dem Begrünungskörper (20) klebend verbunden ist, bis eine hinreichende Verwurzelung des Begrünungskörpers (20) durch die den Saatkörnern (16) entsprechenden Pflanzen erreicht ist.

2. Begrünungselement nach Anspruch 1, dadurch gekennzeichnet, daß die Saatenmatte (10) aus einer Unterschicht (16) und einer damit verbundenen Oberschicht (18) besteht, zwischen denen die Saatkörner (12) fixiert sind, und zwischen denen sich der Trockenkleber (14) befindet, und daß die Unterschicht (16) und die Oberschicht (20) durch ein Vlies gebildet sind.

3. Begrünungselement nach Anspruch 1, dadurch gekennzeichnet, daß die Saatenmatte (10) ein unteres Trägervlies umfaßt, auf dem die Saatkörner und der Trockenkleber angeordnet sind, und daß das Trägervlies mit einem pflanzenverträglichen Klebstoff versprüht ist.

4. Begrünungselement nach Anspruch 2, dadurch gekennzeichnet, daß die Oberschicht durch eine Klebeschicht aus einem pflanzenverträglichen Klebstoff gebildet ist.

5. Begrünungselement nach einem oder mehreren der vorhergehenden Ansprüche 1 - 4, dadurch gekennzeichnet, daß die Saatenmatte (10) in ihrem Bereich unterhalb des Trockenklebers (14) bzw. daß die Unterschicht (16) der Saatenmatte (10) porös ausgebildet ist, so daß der Trockenkleber (14) bei Zugabe von Wasser die Unterschicht (16) leicht durchdringen kann.

6. Begrünungselement nach Anspruch 1, **dadurch gekennzeichnet**, daß die Saatenmatte (10) aus einer Unterschicht (16) und einer damit verbundenen Oberschicht (18) besteht, zwischen denen die Saatkörner (12) fixiert sind, und daß der Trockenkleber (14) auf der unteren Oberfläche der Unterschicht (16) angeordnet und durch eine klebende Verbindung fixiert ist.

7. Begrünungselement nach einem oder mehreren der vorhergehenden Ansprüche 1 - 6, **dadurch gekennzeichnet**, daß die Saatenmatte (10) neben den Saatkörnern (16) gleichmäßig verteilt Dünger enthält.

8. Verfahren zur Bildung einer Begrünung auf einem durch natürlichen Boden und/oder durch Substratflächen gebildeten Begrünungskörper, gekennzeichnet durch folgende Merkmale:
a) auf den Begrünungskörper wird eine Saatenmatte gelegt, welche Saatkörner enthält, die durch die Saatenmatte fixiert und festgehalten sind, und welche einen pflanzenverträglichen Trockenkleber enthält,
b) die Saatenmatte wird bewässert, um den Trockenkleber zu aktivieren, wodurch die Saatenmatte an dem Begrünungskörper haftet.

9. Verfahren nach Anspruch 8, dadurch gekennzeichnet, daß mehrere Bahnen von Saatenmattten nebeneinander auf dem Begrünungskörper zu einer geschlossenen Fläche verlegt werden.
